# EUROPÄISCHE PATENTSCHRIFT

(11) **EP 2 216 695 B1**
(45) Veröffentlichungstag und Bekanntmachung des Hinweises auf die Patenterteilung: **27.03.2013**
(21) Anmeldenummer: 09001787.2
(22) Anmeldetag: 09.02.2009
(51) Int. Cl.: G05B 19/042, G06F 9/44

(54) **Verfahren zum Betrieb eines Automatisierungssystems, korrespondierendes Computerprogramm und System oder Gerät, das nach dem Verfahren arbeitet**
Method for operating an automation system, corresponding computer program and system or device working according to the method
Procédé de fonctionnement d'un système d'automatisation, programme informatique correspondant et système ou appareil fonctionnant selon ce procédé

(43) Veröffentlichungstag der Anmeldung: 11.08.2010
(73) Patentinhaber: Siemens Aktiengesellschaft, 80333 München (DE)
(72) Erfinder: Reuter, Thomas, 76149 Karlsruhe (DE)

(56) Entgegenhaltungen:
- EP-A- 1 265 117
- EP-A- 2 003 563
- WO-A-02/067065

## Beschreibung

Die Erfindung betrifft ein Verfahren zum Betrieb eines Automatisierungssystems, ein korrespondierendes Computerprogramm zur Implementierung des Verfahrens sowie ein System oder Gerät, das nach dem Verfahren arbeitet, insbesondere durch Ausführung des Computerprogramms. Im Einzelnen betrifft die Erfindung die Organisation von Bestandteilen eines Steuerungsprogramms, das durch das Automatisierungssystem oder einzelne Elemente des Automatisierungssystems, z. B. ein oder mehrere Automatisierungsgeräte, als Automatisierungslösung zur Steuerung und/oder Überwachung eines technischen Prozesses, insbesondere eines industriellen Prozesses, wie z. B. einen Fertigungsprozess, ausgeführt wird. Für derartige Steuerungsprogramme ist bekannt, dass diese eine Mehrzahl von Softwarebausteinen und Unterprogrammen umfassen. Für bestimmte Arten von Unterprogrammen hat sich in der Fachwelt auch die Bezeichnung "Task" eingebürgert, so dass beide Bezeichnungen im Folgenden synonym verwendet werden.

Die Softwarebausteine werden bei einer Ausführung des Steuerungsprogramms durch das oder einzelne Unterprogramme aufgerufen. Die Aufrufreihenfolge ist dabei vorgegeben, so dass auch die vorgegebene Aufrufreihenfolge die Funktionalität des Steuerungsprogramms bestimmt, indem z. B. sichergestellt ist, dass ein erster Softwarebaustein vor einem zweiten Softwarebaustein aufgerufen wird, so dass der zweite Softwarebaustein auf Daten zugreifen kann, die vom ersten Softwarebaustein erzeugt, bereitgestellt, verändert oder dergleichen wurden.

Zum Erstellen des Steuerungsprogramms und der davon umfassten Softwarebausteine und Unterprogramme werden üblicherweise graphische Entwicklungssysteme (Engineeringsysteme) verwendet. Solche Entwicklungssysteme unterstützen z. B. auch graphische Sprachen, wobei exemplarisch auf die unter dem Kürzel CFC (Continuous Function Chart) bekannte Programmiersprache verwiesen wird, mit denen Softwarebausteine als Funktionsblock mit Ein- und Ausgängen in einem Plan dargestellt und graphisch miteinander verschaltet werden. Solche Funktionsblöcke basieren dann auf z. B. Funktionsbausteinen, Funktionen, Inline-Code, etc. Die Funktionsblöcke werden in so genannten Plänen angelegt. Durch diese graphische Projektierung im jeweiligen Plan wird der so genannte Datenfluss zwischen den Softwarebausteinen projektiert. Damit der projektierte Plan und die davon umfassten Softwarebausteine zum Ablauf kommen können, müssen diese für einen Aufruf durch das Steuerungsprogramm vorgesehen werden.

Das Steuerungsprogramm umfasst ein Hauptprogramm und ein oder mehrere Unterprogramme, wobei sich im Sinne einer Strukturierung der Automatisierungslösung eingebürgert hat, dass das Hauptprogramm einen Aufruf zumindest eines Unterprogramms umfasst und dass das oder jedes Unterprogramm Aufrufe weiterer Unterprogramme und/oder der Softwarebausteine umfasst. Bei speziellen Lösungen kann sich auch ergeben, dass eine Funktionalität, die entsprechend der vorangehenden Beschreibung hierarchisch einem Hauptprogramm entspricht, nicht als veränderliche Software vorliegt, sondern dagegen z. B. in Firmware codiert ist, derart, dass eine vorgegebene Anzahl von Unterprogrammen/Tasks fest eingeplant wird und das "Hauptprogramm" diese feste Einplanung codiert. Als Unterprogramme, also Tasks, kommen benutzerdefinierte Tasks, z. B. solche, die in einem festen Zeitraster ausgeführt werden und entsprechend als Zeittasks bezeichnet werden, oder auch Systemtasks, z. B. zum Warmstart, Kaltstart, zur Diagnose und dergleichen, oder Fehlertasks, Ereignistasks usw., in Betracht. Damit im Steuerungsprogramm Softwarebausteine aufgerufen werden können, werden diese einzelnen Unterprogrammen des Steuerungsprogramms zugeordnet.

Die WO 02/067065 A2 und die EP 1 265 117 A2 beschreiben den Erhalt eines Steuerungsprogramms durch Auswahl vordefinierter Funktionalitäten, die in dem resultierenden Steuerungsprogramm als Funktionsobjekte enthalten und aus diesem in an sich bekannter Art aufgerufen werden. Aus der EP 2 003 563 A1 ist ein Verfahren zur Fehlersuche bei einem Automatisierungsgerät bekannt, bei dem ein Unterbrechungspunkt in einem Unterprogramm dann aktiv wird, wenn er über eine vorgegebene Aufrufreihenfolge des den Unterbrechungspunkt enthaltenden Unterprogramms erreicht wird.

Nachteilig bei den bisherigen Lösungen, mit denen Aufrufe der Softwarebausteine durch ein oder mehrere Unterprogramme vorgesehen werden, ist, dass die Zuordnung der Softwarebausteine zu den jeweiligen Unterprogrammen manuell und rein taskorientiert durchgeführt wird. Dazu werden die einzelnen Softwarebausteine oder aber ganze Pläne durch einen so genannten Kontrollflusseditor einzelnen Tasks direkt zugeordnet und manuell in eine Ablaufreihenfolge pro Task gebracht.

Da ein und derselbe Softwarebaustein häufig unterschiedlichen Tasks (Zeittasks, Systemtasks, Fehlertasks, Ereignistasks, usw.) zugeordnet werden muss, ist das Verfahren zum Zuordnen der einzelnen Softwarebausteine zu den unterschiedlichen Tasks sehr aufwendig und zudem fehleranfällig. Die Hantierung der Taskzuordnung speziell beim Ändern, Verschieben, Aufteilen und Zusammenführen von Plänen und Softwarebausteinen ist zudem sehr komplex und für den Anwender nur schwer nachvollziehbar.

Darüber hinaus sind Pläne mit z. B. in CFC erstellten Softwarebausteinen bezüglich des Datenflusses granular entkoppelt, aber bezüglich des Kontrollflusses pro Task stark miteinander verwoben. Dies hat zur Folge, dass bei einem Projekt, an dem mehrere Entwickler arbeiten (Multiuser Engineering), der Plan nicht als granulare Einheit für den jeweiligen Entwickler zum Schutz gegen kollidierende Zugriffe durch andere Entwickler gesichert werden kann (Locking).

Eine Aufgabe der vorliegenden Erfindung besteht entsprechend darin, den vorstehend skizzierten Nachteilen abzuhelfen.

Diese Aufgabe wird erfindungsgemäß mit den Merkmalen der Ansprüche 1 bzw. 2 gelöst. Dazu ist bei einem Verfahren zum Betrieb eines Automatisierungssystems mit einem Steuerungsprogramm als Automatisierungslösung für einen zu steuernden und/oder zu überwachenden technischen, insbesondere industriellen Prozess, wobei das Steuerungsprogramm eine Mehrzahl von Softwarebausteinen und Unterprogrammen (Tasks) umfasst und wobei die Softwarebausteine bei einer Ausführung des Steuerungsprogramms durch einzelne Unterprogramme entsprechend einer vorgegebenen Aufrufreihenfolge aufgerufen werden, vorgesehen, dass die Aufrufreihenfolge in einem Aufrufspezifikationsdatensatz kodiert wird.

Bei dem Aufrufspezifikationsdatensatz handelt es sich um eine Zusammenstellung von Daten, die sich ausschließlich auf aufrufbare Softwarebausteine und deren Reihenfolge beziehen, so dass Daten nach Art von Programmcodeanweisungen, die bei Lösungen nach dem Stand der Technik in einem Unterprogramm bisher erforderlich waren, um an bestimmten Positionen des Unterprogramms den Aufruf eines Softwarebausteins zu bewirken, nicht als ein derartiger Aufrufspezifikationsdatensatz zu verstehen sind. Derartige Aufrufe wären über das jeweilige Unterprogramm verteilt, so dass bereits vor diesem Hintergrund nicht von einem Datensatz als zusammenhängende Kollektion von Daten gesprochen werden kann. Zudem sind Aufrufe von Softwarebausteinen aus einem Unterprogramm gerade keine Daten, sondern gemäß allgemeinem Verständnis Programmcodeanweisungen, so dass auch in dieser Hinsicht eine Interpretation von Aufrufen von Softwarebausteinen direkt aus dem Unterprogramm nicht als Aufrufspezifikationsdatensatz oder Teil eines solchen Datensatzes in Betracht kommt.

Die Erfindung sieht vor, dass in einen Aufrufspezifikationsdatensatz eine für die Softwarebausteine fest projektierte Aufrufreihenfolge abgelegt wird und dass der Aufrufspezifikationsdatensatz für das oder jedes Unterprogramm für einen Aufruf der Softwarebausteine entsprechend dem Aufrufspezifikationsdatensatz zur Verfügung steht. Der Aufrufspezifikationsdatensatz kann also unabhängig von dem jeweiligen Unterprogramm angelegt werden und das Unterprogramm greift zum Aufrufen der jeweils relevanten Softwarebausteine auf den Aufrufspezifikationsdatensatz zu und mit diesem Zugriff wird anhand der Daten in dem Aufrufspezifikationsdatensatz der Aufruf der jeweiligen Softwarebausteine entsprechend der in dem Aufrufspezifikationsdatensatz kodierten Aufrufreihenfolge bewirkt.

Der Vorteil besteht darin, dass in dem Aufrufspezifikationsdatensatz die Aufrufreihenfolge der Softwarebausteine an zentraler Stelle zusammengefasst ist und dass alle Unterprogramme, bei denen der Aufruf von Softwarebausteinen vorgesehen ist, auf einen solchen Aufrufspezifikationsdatensatz zugreifen können. Die so festgelegte Reihenfolge wird also für jedes Unterprogramm beachtet.

Auf diese Weise werden zum einen ungünstige Aufrufreihenfolgen der Softwarebausteine vermieden. Auf der anderen Seite wird die Projektierung der Automatisierungslösung vereinfacht, weil bei Verwendung eines Aufrufspezifikationsdatensatzes normalerweise das Risiko, dass der Aufruf eines Softwarebausteines unbeabsichtigt unterbleibt, erheblich reduziert ist. Die Entwicklung von Automatisierungslösungen wird damit übersichtlicher und insoweit schneller und qualitativ besser. Zudem ergibt sich eine leichtere Wartbarkeit, weil die Art und die Reihenfolge der Aufrufe von Softwarebausteinen nur noch an einer zentralen Stelle kodiert sind.

Des Weiteren ist vorgesehen, dass der Aufrufspezifikationsdatensatz für jedes von dem Steuerungsprogramm umfasste Unterprogramm einen Aktivierungsvektor umfasst. Der Aktivierungsvektor legt durch Einträge entsprechend der Aufrufreihenfolge fest, welche Softwarebausteine durch das jeweilige Unterprogramm im Betrieb aufgerufen werden. Wenn also das Steuerungsprogramm einen ersten, zweiten und dritten Softwarebaustein umfasst und die Aufrufreihenfolge den dritten Softwarebaustein vor den ersten Softwarebaustein und anschließend den zweiten Softwarebaustein nennt, ist damit die grundsätzliche Aufrufreihenfolge, nämlich zunächst dritter Softwarebaustein, dann erster Softwarebaustein und sodann zweiter Softwarebaustein, festgelegt. Der Aktivierungsvektor ermöglicht nun die Berücksichtigung von Situationen, nach denen einzelne Unterprogramme nicht sämtliche Softwarebausteine aufrufen müssen. Wenn ein erstes Unterprogramm sämtliche drei Softwarebausteine aufrufen muss, wird der Aktivierungsvektor an einer ersten, zweiten und dritten Position einen Eintrag erhalten, der einen vorgesehenen Aufruf der drei Softwarebausteine kodiert. Wenn ein zweites Unterprogramm nur den ersten Softwarebaustein aufrufen muss, wird ein entsprechender Aktivierungsvektor an der ersten und dritten Position (also bezüglich des dritten und zweiten Softwarebausteins) Einträge umfassen, die kodieren, dass der dritte und zweite Softwarebaustein nicht aufgerufen werden, und an der zweiten Position einen Eintrag umfassen, der kodiert, dass der erste Softwarebaustein aufgerufen wird. Die grundsätzliche Reihenfolge der Softwarebausteine bleibt also entsprechend der festgelegten Aktivierungsreihenfolge unverändert. Mit dem Aktivierungsvektor können die Aufrufe einzelner Softwarebausteine quasi an- und abgeschaltet werden.

Eine alternative Ausführungsform zur Berücksichtigung von Situationen, bei denen Unterprogramme nicht sämtliche Softwarebausteine aufrufen müssen, besteht darin, dass für jedes von dem Steuerungsprogramm umfasste Unterprogramm ein eigener Aufrufspezifikationsdatensatz vorgesehen ist. Bei solchen unterprogrammspezifischen Aufrufspezifikationsdatensätzen umfasst jeder Datensatz eine für das Unterprogramm festgelegte Aufrufreihenfolge. Wenn ein Unterprogramm einen bestimmten Softwarebaustein nicht aufrufen soll, ist dieser von der Aufrufreihenfolge nicht umfasst.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Im Hinblick auf eine Auslegung der Ansprüche ist bei einer näheren Konkretisierung eines Merkmals in einem nachgeordneten Anspruch davon auszugehen, dass eine derartige Beschränkung in den jeweils vorangehenden Ansprüchen nicht vorhanden ist.

Für beide vorgenannten Lösungen, also Aktivierungsvektor und unterprogrammspezifischer Aufrufspezifikationsdatensatz, ist bei einer bevorzugten Ausführungsform vorgesehen, dass solche Datenstrukturen nur für solche Unterprogramme angelegt werden, die auch tatsächlich Softwarebausteine aufrufen. Ansonsten bestünde die Möglichkeit für jedes Unterprogramm, das keine Softwarebausteine aufruft, quasi eine leere Datenstruktur anzulegen; dies belegt jedoch unnötig Speicherplatz, so dass diese zusätzliche Unterscheidung sinnvoll ist.

Bei Steuerungsprogrammen mit einer größeren Anzahl von Softwarebausteinen sind diese üblicherweise in Gruppen organisiert, wobei solche Bausteingruppen sich z. B. aufgrund einzelner in einer Entwicklungsumgebung erstellter so genannter Pläne ergeben. Ein Plan oder dergleichen legt also eine Gruppenzugehörigkeit der jeweils umfassten Softwarebausteine fest und alle Softwarebausteine eines Plans gehören zur gleichen Bausteingruppe. Bei solchen Situationen ist vorteilhaft vorgesehen, dass jeder Bausteingruppe, also jedem Plan, ein Aufrufspezifikationsdatensatz zugeordnet ist. Es ergeben sich auf diese Weise bei mehreren Bausteingruppen mehrere Aufrufspezifikationsdatensätze und diese stehen für das oder jedes Unterprogramm für einen Aufruf der Softwarebausteine entsprechend dem jeweiligen Aufrufspezifikationsdatensatz und der dort kodierten Aufrufreihenfolge zur Verfügung. Der Vorteil der Verwendung je eines Aufrufspezifikationsdatensatzes für jede Bausteingruppe besteht in der erleichterten Wartbarkeit der Automatisierungslösung. Jeder Aufrufspezifikationsdatensatz bleibt für sich entsprechend dem Umfang der jeweiligen Bausteingruppe übersichtlich, was nicht notwendig in gleicher Weise gilt, wenn sämtliche Softwarebausteine über Bausteingruppengrenzen hinweg von einem Aufrufspezifikationsdatensatz erfasst würden. Eine Reihenfolge, entsprechend derer die Aufrufreihenfolge einer Mehrheit von Aufrufspezifikationsdatensätzen berücksichtigt wird, kann durch eine projektierbare Aufrufreihenfolge auf einer nächsthöheren Ebene festgelegt werden oder sie kann sich implizit aus einer sich für die Bausteinbaugruppen ergebenden Ordnungszahl ergeben, z. B. derart, dass zunächst der Aufrufspezifikationsdatensatz einer ersten Bausteingruppe berücksichtigt wird, sodann der Aufrufspezifikationsdatensatz einer zweiten Bausteingruppe usw.

Die Aufrufspezifikationsdatensätze können für mehrere Unterprogramme jeweils einen Aktivierungsvektor umfassen oder es kann gemäß der alternativen Ausführungsform vorgesehen sein, dass für jedes Unterprogramm und für jede Bausteingruppe jeweils ein eigener Aufrufspezifikationsdatensatz vorgesehen ist.

Bevorzugt ist vorgesehen, dass der oder jeder Aufrufspezifikationsdatensatz jeweils einer Bausteingruppe zugeordnet ist. Jede Bausteingruppe umfasst damit ihren eigenen Aufrufspezifikationsdatensatz. Zudem ermöglicht die feste Zuordnung von Bausteingruppe und Aufrufspezifikationsdatensatz eine Erleichterung der Referenzierung der jeweils aufzurufenden Softwarebausteine, indem z. B. eine relative Adressierung, die sich nur auf die jeweilige Bausteingruppe bezieht, ausreicht.

Das Verfahren, wie hier beschrieben und nachfolgend weiter erläutert, ist bevorzugt in Software implementiert, so dass die Erfindung auch ein Computerprogramm mit durch einen Computer ausführbaren Programmcodeanweisungen zur Realisierung des Verfahrens betrifft. Solche Computerprogramme werden üblicherweise auf digitalen Speichermedien, also elektronischen, magnetischen und optischen usw. Speichermedien, abgelegt, so dass die Erfindung insoweit auch ein solches Speichermedium mit einem Computerprogramm zur Implementierung der Erfindung betrifft. Schließlich bezieht sich die Erfindung auch auf ein Computersystem, insbesondere ein Programmiergerät, das an ein Automatisierungssystem anschließbar oder angeschlossen ist, auf dem ein derartiges Computerprogramm geladen ist. Mit einem derartigen Computersystem wird der Aufrufspezifikationsdatensatz als Container für die fest projektierte Aufrufreihenfolge angelegt. Der Aufrufspezifikationsdatensatz steht dann für die Ausführung des Steuerungsprogramms durch ein Automatisierungsgerät zur Verfügung.

Damit betrifft die Erfindung schließlich auch ein Automatisierungssystem mit einem Automatisierungsgerät, welches einen Speicher und eine Verarbeitungseinheit umfasst, wobei in dem Speicher ein Steuerungsprogramm als Automatisierungslösung für einen zu steuernden und/oder zu überwachenden technischen Prozess abgelegt ist und wobei das Steuerungsprogramm eine Mehrzahl von Softwarebausteinen und Unterprogrammen umfasst, wobei die Softwarebausteine bei einer Ausführung des Steuerungsprogramms mittels der Verarbeitungseinheit durch einzelne Unterprogramme entsprechend einer vorgegebenen Aufrufreihenfolge aufgerufen werden. Ein solches Automatisierungssystem zeichnet sich nach der Erfindung dadurch aus, dass der Aufruf der Softwarebausteine entsprechend einem Aufrufspezifikationsdatensatz erfolgt, der nach einem Verfahren gemäß der Erfindung oder einer ihrer Ausgestaltungen angelegt wurde.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung auch Abänderungen und Modifikationen möglich, nämlich solche Varianten und Kombinationen, die z. B. durch Kombination oder Abwandlung von einzelnen in verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen:
- FIG 1: ein Automatisierungssystem mit einer Anzahl kommuni- kativ verbundener Automatisierungsgeräte zur Steue- rung und/oder Überwachung eines technischen Prozesses und
- FIG 2: Bestandteile eines durch ein oder mehrere Automati- sierungsgeräte als Automatisierungslösung ausgeführ- ten Steuerungsprogramms, davon umfasst Unterprogramme und Softwarebausteine, die durch solche Unterprogram- me aufgerufen werden können.

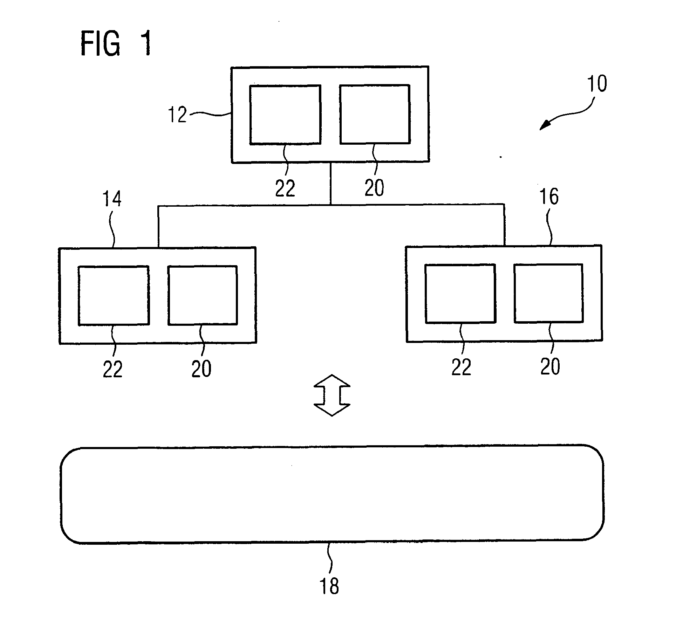

FIG 1 zeigt schematisch vereinfacht ein Automatisierungssystem 10 mit einer Anzahl kommunikativ verbundener Automatisierungsgeräte 12, 14, 16. Das Automatisierungssystem 10 ist insgesamt zur Steuerung und/oder Überwachung eines technischen Prozesses 18, insbesondere eines industriellen technischen Prozesses, wie z. B. eines Fertigungsprozesses, vorgesehen. Jedes Automatisierungsgerät 12-16, wobei einfache Automatisierungssysteme 10 auch lediglich ein einzelnes Automatisierungssystem 12-16 umfassen können, weist eine Verarbeitungseinheit 20 nach Art eines Prozessors oder dergleichen und einen Speicher 22 auf. In dem Speicher 22 ist als Automatisierungslösung ein Steuerungsprogramm abgelegt, das im Betrieb des jeweiligen Automatisierungsgeräts 12-16 durch dessen Verarbeitungseinheit 20 in an sich bekannter Weise ausgeführt wird.

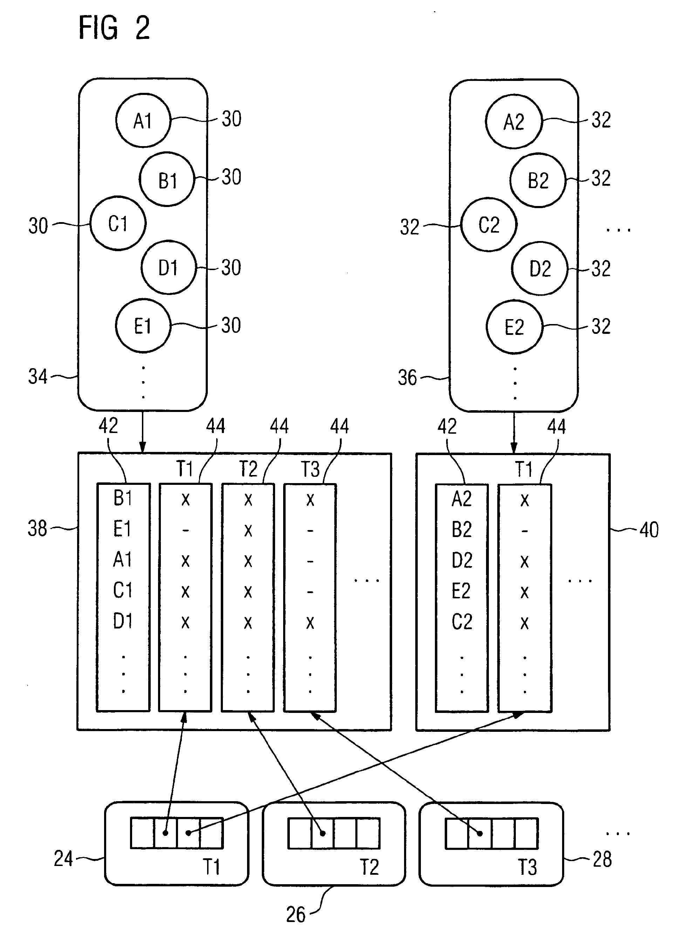

FIG 2 zeigt als Bestandteile solcher Steuerungsprogramme Unterprogramme 24, 26, 28, die auch als Tasks bezeichnet werden und entsprechend in der Darstellung mit "T1", "T2", "T3" bezeichnet sind. Das Steuerungsprogramm umfasst des Weiteren Softwarebausteine 30, 32, die zur weiteren Unterscheidung in der Darstellung auch symbolisch mit "A1", "B1", "C1", "D1", "E1"; "A2", "B2", "C2", "D2", "E2" bezeichnet sind. Bei der Darstellung in FIG 2 ergibt sich eine Gruppierung der einzelnen Softwarebausteine 30, 32 aufgrund einer Zugehörigkeit zu jeweils unterschiedlichen Bausteingruppen 34, 36, die bei der Erstellung des Steuerungsprogramms z. B. in Form so genannter Pläne gebildet werden.

Eine Ausführung einzelner oder mehrerer Unterprogramme 24-28 ergibt sich aufgrund eines entsprechenden Aufrufs in dem jeweiligen Steuerungsprogramm. Jedes Unterprogramm 24-28 kann den Aufruf eines oder mehrerer Softwarebausteine 30, 32 erfordern. Für eine erleichterte Festlegung einer Reihenfolge, in der solche Aufrufe erfolgen (Aufrufreihenfolge), schlägt die Erfindung die Verwendung eines Aufrufspezifikationsdatensatzes 38, 40 vor. Jeder Aufrufspezifikationsdatensatz 38, 40 umfasst einen Aufrufvektor 42, der die jeweilige Aufrufreihenfolge kodiert. In der Darstellung in FIG 2 ist die jeweils kodierte Aufrufreihenfolge durch Wiederholung der symbolischen Bezeichner der einzelnen Softwarebausteine 30, 32 dargestellt. Ein Unterprogramm 24-28 greift also bei Verwendung des Ansatzes gemäß der Erfindung auf den Aufrufspezifikationsdatensatz 38, 40 und den davon jeweils umfassten Aufrufvektor 42 zu, um einen Aufruf der erforderlichen Softwarebausteine 30, 32 zu bewirken.

Wenn nicht jedes Unterprogramm 24-28 sämtliche Softwarebausteine 30, 32 aufrufen muss, kann entweder für jedes Unterprogramm 24-28 ein eigener Aufrufspezifikationsdatensatz 38, 40 vorgesehen sein oder jeder Aufrufspezifikationsdatensatz 38, 40 wird um einen Aktivierungsvektor 44 ergänzt. Bei Verwendung eines Aktivierungsvektors 44 umfasst jeder Aufrufspezifikationsdatensatz 38, 40 für jedes Unterprogramm 24-28, das Softwarebausteine 30, 32 aufrufen muss, einen eigenen Aktivierungsvektor 44 und der Aufruf der jeweiligen Softwarebausteine 30, 32 erfolgt entsprechend dem Aktivierungsvektor 44 in der durch den Aufrufvektor 42 festgelegten Reihenfolge. Dies ist in der Darstellung in FIG 2 durch die Pfeile ausgehend von den einzelnen Unterprogrammen 24-28 zu jeweils einzelnen Aktivierungsvektoren 44 gezeigt. Jeder Aktivierungsvektor 44 umfasst entsprechend der Anzahl der Einträge in dem Aufrufvektor 42 Daten, die ggf. einen Aufruf des entsprechenden Softwarebausteins 30, 32 kodieren (in der Darstellung durch ein Kreuz ("x") dargestellt). Softwarebausteine 30, 32, die durch ein Unterprogramm 24-28 nicht aufgerufen werden müssen, werden in dem Aktivierungsvektor 44 quasi ausgeschaltet (für das Unterprogramm mit dem symbolischen Bezeichner "T1" z. B. für den Softwarebaustein mit dem symbolischen Bezeichner "E1" gezeigt).

FIG 2 zeigt bereits den Sonderfall, dass ein Steuerungsprogramm Softwarebausteine 30, 32 umfasst, die in unterschiedlichen Bausteingruppen 34, 36 organisiert sind. Für jede derartige Bausteingruppe 34, 36 ist - wie dargestellt - ein eigener Aufrufspezifikationsdatensatz 38, 40 vorgesehen und die den Aufrufspezifikationsdatensatz 38, 40 darstellende Instanz einer zugrunde liegenden Datenstruktur ist fest mit der Datenstruktur, die eine Bausteingruppe 34, 36 implementiert, verbunden, was durch die zwischen Bausteingruppe 34, 36 und zugehörigem Aufrufspezifikationsdatensatz 38, 40 verlaufenden Pfeile veranschaulicht ist. Eine derartige Zusammenfassung der von den jeweiligen Datenstrukturen umfassten Daten ermöglicht einen besonders effizienten Aufruf der Softwarebausteine 30 über den jeweiligen Aufrufspezifikationsdatensatz 38, 40, z. B. weil der Aufrufvektor 42 zur Kodierung der jeweiligen Softwarebausteine 30, 32 eine relative Adressierung verwenden kann, nachdem aufgrund der Zusammengehörigkeit von Bausteingruppe 34, 36 und Aufrufspezifikationsdatensatz 38, 40 eine eindeutige Auflösung der jeweils involvierten Referenzen möglich ist.

Für die Unterprogramme 24-28 sollen die nebeneinander angeordneten Kästchen einzelne Programmcodeanweisungen darstellen und diejenigen Programmcodeanweisungen, von denen ein Pfeil zu einem Aktivierungsvektor 44 ausgeht, sind als Programmcodeanweisungen zum Aufruf der durch den Aufrufvektor 42 kodierten Softwarebausteine 30, 32 anzusehen.

Eine Festlegung des Aufrufspezifikationsdatensatzes 38, 40 mit Aufrufvektor 42 und ggf. Aktivierungsvektor 44 erfolgt mittels eines Automatisierungsgerätes 12-16, das in dem Automatisierungssystem 10 als Programmiergerät fungiert und ggf. nur zeitweise Bestandteil des Automatisierungssystems 10 ist. Die Verwendung eines oder mehrerer Aufrufspezifikationsdatensätze 38, 40 erfolgt durch die von dem Automatisierungssystem 10 für die Realisierung der jeweiligen Automatisierungslösung dauerhaft umfassten Automatisierungsgeräte 12-16 während der Ausführung des jeweiligen Steuerungsprogramms.

Zusammenfassend lässt sich die vorliegende Erfindung damit kurz wie folgt darstellen: Es werden ein Verfahren zum Betrieb eines Automatisierungssystems, ein korrespondierendes Computerprogramm zur Implementierung des Verfahrens sowie ein System oder Gerät, das nach dem Verfahren arbeitet, angegeben, wobei ein Steuerungsprogramm als Automatisierungslösung für einen technischen Prozess 18 eine Mehrzahl von Softwarebausteinen 30, 32 und Unterprogrammen 24-28 umfasst, wobei die Softwarebausteine 30, 32 durch einzelne Unterprogramme 24, 28 entsprechend einer vorgegebenen Aufrufreihenfolge aufgerufen werden, wobei in einem Aufrufspezifikationsdatensatz 38, 40 eine für die Softwarebausteine 30, 32 fest projektierte Aufrufreihenfolge in einem Aufrufvektor 42 abgelegt wird und wobei der Aufrufspezifikationsdatensatz 38, 40 für das oder jedes Unterprogramm 24-28 für einen Aufruf der Softwarebausteine 30, 32 entsprechend dem Aufrufspezifikationsdatensatz 38, 40 zur Verfügung steht.

## Patentansprüche

1. Verfahren zum Betrieb eines Automatisierungssystems (10) mit einem als Automatisierungslösung für einen zu steuernden und/oder zu überwachenden technischen Prozess (18) vorgesehenen Steuerungsprogramm,
wobei das Steuerungsprogramm eine Mehrzahl von Softwarebausteinen (30, 32) und Unterprogrammen (24-28) umfasst, wobei die Softwarebausteine (30, 32) bei einer Ausführung des Steuerungsprogramms durch einzelne Unterprogramme (24-28) entsprechend einer vorgegebenen Aufrufreihenfolge aufgerufen werden,
**dadurch gekennzeichnet,**
**dass** in einem Aufrufspezifikationsdatensatz (38, 40) eine für die Softwarebausteine (30, 32) fest projektierte Aufrufreihenfolge abgelegt wird ,
**dass** der Aufrufspezifikationsdatensatz (38, 40) für das oder jedes Unterprogramm (24-28) für einen Aufruf der Softwarebausteine (30, 32) entsprechend dem Aufrufspezifikationsdatensatz (38, 40) zur Verfügung steht und
**dass** der Aufrufspezifikationsdatensatz (38, 40) für jedes von dem Steuerungsprogramm umfasste Unterprogramm (24-28), das einen oder mehrere Softwarebausteine (30, 32) aufruft, einen Aktivierungsvektor (44) umfasst, wobei der Aktivierungsvektor (44) durch Einträge entsprechend der Reihenfolge der Aufrufreihenfolge festlegt, welche Softwarebausteine (30, 32) im Betrieb aufgerufen werden.

2. Verfahren zum Betrieb eines Automatisierungssystems (10) mit einem als Automatisierungslösung für einen zu steuernden und/oder zu überwachenden technischen Prozess (18) vorgesehenen Steuerungsprogramm,
wobei das Steuerungsprogramm eine Mehrzahl von Softwarebausteinen (30, 32) und Unterprogrammen (24-28) umfasst, wobei die Softwarebausteine (30, 32) bei einer Ausführung des Steuerungsprogramms durch einzelne Unterprogramme (24-28) entsprechend einer vorgegebenen Aufrufreihenfolge aufgerufen werden,
**dadurch gekennzeichnet,**
**dass** in einem Aufrufspezifikationsdatensatz (38, 40) eine für die Softwarebausteine (30, 32) fest projektierte Aufrufreihenfolge abgelegt wird,
**dass** der Aufrufspezifikationsdatensatz (38, 40) für das oder jedes Unterprogramm (24-28) für einen Aufruf der Softwarebausteine (30, 32) entsprechend dem Aufrufspezifikationsdatensatz (38, 40) zur Verfügung steht und
**dass** für jedes von dem Steuerungsprogramm umfasste Unterprogramm (24-28), das einen oder mehrere Softwarebausteine (30, 32) aufruft, ein eigener Aufrufspezifikationsdatensatz (38, 40) vorgesehen ist.

3. Verfahren nach Anspruch 1 oder 2, wobei die Softwarebausteine (30, 32) mehreren Bausteingruppen (34, 36) zugehören, wobei jeder Bausteingruppe (34, 36) ein eigener Aufrufspezifikationsdatensatz (38, 40) zugeordnet ist und wobei die Aufrufspezifikationsdatensätze (38, 40) für das oder jedes Unterprogramm (24-28) für einen Aufruf der Softwarebausteine (30, 32) entsprechend dem jeweiligen Aufrufspezifikationsdatensatz (38, 40) zur Verfügung stehen.

4. Verfahren nach Anspruch 3, wobei der oder jeder Aufrufspezifikationsdatensatz (38, 40) jeweils einer Bausteingruppe (34, 36) zugeordnet ist.

5. Computerprogramm mit durch einen Computer ausführbaren Programmcodeanweisungen zur Implementierung des Verfahrens nach einem der Ansprüche 1 bis 4, wenn das Computerprogramm auf einem Computer ausgeführt wird.

6. Digitales Speichermedium mit einem durch einen Computer ausführbaren Computerprogramm gemäß Anspruch 5.

7. Computersystem, insbesondere Programmiergerät für ein Automatisierungssystem, auf dem ein Computerprogramm nach Anspruch 5 geladen ist.

8. Automatisierungssystem (10) mit einem Automatisierungsgerät (12-16) mit einem Speicher (22) und einer Verarbeitungseinheit (20), wobei der Speicher (22) ein durch die Verarbeitungseinheit ausführbares Computerprogramm gemäß Anspruch 5 enthält.

## Claims

1. Method for operating an automation system (10) having a control program provided as an automation solution for a technical process (18) requiring to be controlled and/or monitored,
wherein the control program comprises a plurality of software modules (30, 32) and subprograms (24-28), wherein the software modules (30, 32) are invoked by individual subprograms (24-28) in accordance with a predefined call sequence during an execution of the control program,
**characterised in that**
a call sequence permanently configured for the software modules (30, 32) is stored in a call specification dataset (38, 40),
**in that** the call specification dataset (38, 40) is available for the subprogram or for each subprogram (24-28) for the purpose of invoking the software modules (30, 32) in accordance with the call specification dataset (38, 40), and **in that** the call specification dataset (38, 40) includes an activation vector (44) for each subprogram (24-28) which is contained in the control program and which invokes one or more software modules (30, 32), wherein the activation vector (44) specifies, by means of entries corresponding to the order of the call sequence, which software modules (30, 32) will be invoked during operation.

2. Method for operating an automation system (10) having a control program provided as an automation solution for a technical process (18) requiring to be controlled and/or monitored,
wherein the control program comprises a plurality of software modules (30, 32) and subprograms (24-28), wherein the software modules (30, 32) are invoked by individual subprograms (24-28) in accordance with a predefined call sequence during an execution of the control program,
**characterised in that**
a call sequence permanently configured for the software modules (30, 32) is stored in a call specification dataset (38, 40),
**in that** the call specification dataset (38, 40) is available for the subprogram or for each subprogram (24-28) for the purpose of invoking the software modules (30, 32) in accordance with the call specification dataset (38, 40), and **in that** a separate call specification dataset (38, 40) is provided for each subprogram (24-28) which is contained in the control program and which invokes one or more software modules (30, 32).

3. Method according to claim 1 or 2, wherein the software modules (30, 32) are members of a plurality of module groups (34, 36), wherein a separate call specification dataset (38, 40) is assigned to each module group (34, 36), and wherein the call specification datasets (38, 40) for the subprogram or for each subprogram (24-28) are available for the purpose of invoking the software modules (30, 32) in accordance with the respective call specification dataset (38, 40).

4. Method according to claim 3, wherein the call specification dataset or each call specification dataset (38, 40) is in each case assigned to a module group (34, 36).

5. Computer program comprising program code instructions executable by means of a computer for the purpose of implementing the method according to one of claims 1 to 4 when the computer program is executed on a computer.

6. Digital storage medium having a computer program according to claim 5 which is executable by means of a computer.

7. Computer system, in particular programming device for an automation system, on which a computer program according to claim 5 is loaded.

8. Automation system (10) having an automation device (12-16) comprising a memory (22) and a processing unit (20), wherein the memory (22) contains a computer program according to claim 5 which can be executed by means of the processing unit.

## Revendications

1. Procédé pour faire fonctionner un système ( 10 ) d'automatisation par un programme de commande prévu comme solution d'automatisation pour une opération ( 18 ) technique à commander et/ou à contrôler,
dans lequel le programme de commande comprend une multiplicité de modules ( 30, 32 ) de logiciel et des sous-programmes ( 24 à 28 ), les modules ( 30, 32 ) de logiciel étant appelés lors d'une exécution du programme de commande par des sous-programmes (24 à 28) individuels conformément à une succession d'appels prescrite,
**caractérisé**
**en ce que** l'on met, dans un jeu (38, 40) de données de spécification d'appel, une succession d'appels projetée de manière fixe pour les modules (30, 32) de logiciel,
**en ce que** le jeu (38, 40) de données de spécification d'appel est, pour le ou pour chaque sous-programme (24 à 28), mis à disposition pour un appel des modules ( 30, 32 ) de logiciel correspondant au jeu ( 38, 40 ) de données de spécification d'appel et
**en ce que** le jeu ( 38, 40 ) de données de spécification d'appel comprend un vecteur ( 44 ) d'activation pour chaque sous-programme ( 24 à 28 ), qui est englobé par le programme de commande et qui appelle un ou plusieurs modules ( 30, 32 ) de logiciel, le vecteur ( 44 ) d'activation étant fixé par des entrées correspondant à la succession d'appels, lesquels modules ( 30, 32 ) de logiciel sont appelés en fonctionnement.

2. Procédé pour faire fonctionner un système (10) d'automatisation par un programme de commande prévu comme solution d'automatisation pour une opération ( 18 ) technique à commander et/ou à contrôler,
dans lequel le programme de commande comprend une multiplicité de modules ( 30, 32 ) de logiciel et des sous-programmes ( 24 à 28 ), les modules ( 30, 32 ) de logiciel étant appelés lors d'une exécution du programme de commande par des sous-programmes ( 24 à 28 ) individuels conformément à une succession d'appels prescrite,
**caractérisé**
**en ce que** l'on met, dans un jeu ( 38, 40 ) de données de spécification d'appel, une succession d'appels projetée de manière fixe pour les modules ( 30, 32 ) de logiciel,
**en ce que** le jeu ( 38, 40 ) de données de spécification d'appel est, pour le ou pour chaque sous-programme ( 24 à 28 ), mis à disposition pour un appel des modules ( 30, 32 ) de logiciel correspondant au jeu ( 38, 40 ) de données de spécification d'appel et
**en ce que**, pour chaque sous-programme ( 24 à 28 ), qui est englobé par le programme de commande et qui appelle un ou plusieurs modules ( 30, 32 ) de logiciel, il est prévu un jeu ( 38, 40 ) propre de données de spécification d'appel.

3. Procédé suivant la revendication 1 ou 2, dans lequel les modules ( 30, 32 ) de logiciel appartiennent à plusieurs groupes ( 34, 36 ) de module, chaque groupe ( 34, 36 ) de module étant associé à son propre jeu ( 38, 40 ) de données de spécification d'appel et les jeux ( 38, 40 ) de données de spécification d'appel étant mis à disposition pour le ou chaque sous-programme ( 24 à 28 ) pour un appel des modules ( 30, 32 ) de logiciel correspondant au jeu ( 38, 40 ) de données de spécification d'appels respectif.

4. Procédé suivant la revendication 3, dans lequel le ou chaque jeu ( 38, 40 ) de données de spécification d'appel est associé à respectivement à un groupe ( 34, 36 ) de module.

5. Programme d'ordinateur ayant des instructions de code de programme pouvant être exécutées par un ordinateur, pour la mise en oeuvre du procédé suivant l'une des revendications 1 à 4, lorsque le programme d'ordinateur est exécuté sur un ordinateur.

6. Support de mémoire numérique comprenant un programme d'ordinateur pouvant être exécuté par un ordinateur suivant la revendication 5.

7. Système informatique, notamment appareil de programmation d'un système d'automatisation, sur lequel un programme d'ordinateur suivant la revendication 5 est chargé.

8. Système ( 10 ) d'automatisation ayant un appareil ( 12 à 16 ) d'automatisation ayant une mémoire ( 12 ) et une unité ( 20 ) de traitement, dans lequel la mémoire ( 12 ) contient un programme d'ordinateur suivant la revendication 5, qui peut être exécuté par l'unité de traitement.
